# EUROPÄISCHE PATENTANMELDUNG

(11) **EP 1 783 670 A1**
(43) Veröffentlichungstag der Anmeldung: **09.05.2007**
(21) Anmeldenummer: 05022027.6
(22) Anmeldetag: 10.10.2005
(51) Int. Cl.: G06Q 10/00

(54) **Verfahren und Vorrichtung zur kombinierten Billett- und Gepäcktransportbestellung**

(71) Anmelder: Siemens Schweiz AG, 8047 Zürich (CH)
(72) Erfinder: Fischer, Michael, Dr., 8932 Mettmenstetten (CH)
(74) Vertreter: Fischer, Michael

(57) **Zusammenfassung**

Der vorliegenden Erfindung liegt die Aufgabe zugrunde, ein Verfahren und eine Vorrichtung zur kombinierten Billett- und Gepäcktransportbestellung anzugeben, mit denen es möglich ist, den Vorgang des Billetkaufs und der Gepäcktransportbestellung zu vereinfachen.

## Beschreibung

Die vorliegende Erfindung betrifft ein Verfahren und eine Vorrichtung zur kombinierten Billett- und Gepäcktransportbestellung.

Für Reisende, vor allen Dingen für ältere oder behinderte Reisende, stellt sich sehr häufig das Problem, dass sie aufgrund ihrer körperlichen Verfassung nicht (mehr) oder nur schwerlich in der Lage sind, ihr Gepäck selbst während der Reise mitzuführen. Beispielsweise sei hierfür der Transfer des Gepäcks in einem Umsteigebahnhof vom Ankunftsgleis zum Abfahrtsgleis Bahnhof zu nennen. Ebenso schwierig gestaltet sich die Anfahrt mit dem Gepäck zum Abreise- und Ankunftsort.

Zur Lösung dieses Problems bieten die Bahnunternehmen zusammen mit Paketdiensten einen Service an, der das Gepäck von der Startadresse abholt und an die Zieladresse liefert. Logistisch sind dabei der Buchungsvorgang der Bahnreise und der Buchungsvorgang des Gepäcktranspvrtes vollständig voneinander getrennt. Damit müssen vielfach Formulare mehrfach ausgefüllt werden, ohne dass für den Kunden die Möglichkeit besteht, den Verbleib seines Gepäcks zu verfolgen. Ausserdem sind die logistischen Stationen des Billettkaufs und der Gepäckstückaufgabe üblicherweise räumlich von einander getrennt, wodurch sich für den Kunden eine weitere Belastung aufgrund der verschiedenen anzulaufenden Stationen ergibt.

Der vorliegenden Erfindung liegt daher die Aufgabe zugrunde, ein Verfahren und eine Vorrichtung zur kombinierten Billettund Gepäcktransportbestellung anzugeben, mit denen es möglich ist, den Vorgang des Billettkaufs und der Gepäcktransportbestellung zu vereinfachen

Diese Aufgabe wird bezüglich des Verfahrens erfindungsgemäss dadurch gelöst, dass ein Verfahren zur kombinierten Billettund Gepäcktransportbestellung vorgesehen ist, bei dem
a) eine durch einen Abreiseort und einen Zielort charakterisierte Reiseroute bestimmt wird;
b) eine durch Abholdetails und Ablieferdetails charakterisierte Gepäcktransportroute bestimmt wird;
c) ein der Reiseroute entsprechendes Billett erstellt wird;
d) mindestens ein der Gepäcktransportroute entsprechender Gepäcktag erstellt wird, und
e) ein die Gepäcktransportroute und die erstellten Gepäcktags charakterisierender Datensatz an eine für die Abwicklung der Gepäcktransportbestellung vorbestimmbare Adresse übermittelt wird.

Auf diese Weise wird es dem Reisenden ermöglicht, mit der Festlegung der Reiseroute auch die Details für den gewünschten Gepäcktransport angeben zu können. Mit der Übermittlung des die Gepäcktransportroute und die erstellten Gepäcktags charakterisierender Datensatz wird der Gepäcktransport quasi ohne weiteres Zutun des Reisenden arrangiert und kann wunschgemäss sowohl in der Hin- als auch in der Gegenrichtung angegeben werden. Anhand des Datensatzes ist das Gepäcktransportunternehmen beispielsweise in der Lage, direkt mit dem Reisenden in Kontakt zu treten und eine Zeit und einen Ort für die Gepäckabholung zu definieren.

Bezüglich der Vorrichtung wird diese Aufgabe erfindungsgemäss entsprechend durch eine Vorrichtung zur kombinierten Billettund Gepäcktransportbestellung gelöst, bei der
a) eine Datenverarbeitungsanlage mit einem Benutzerinterface vorgesehen ist, mit der eine durch einen Abreiseort und einen Zielort charakterisierte Reiseroute und eine durch Abholdetails und Ablieferdetails charakterisierte Gepäcktransportroute bestimmbar sind;
b) eine Billettausgabeeinheit vorgesehen ist, mit der ein der Reiseroute entsprechendes Billett erstellbar ist;
c) eine Gepäcktagausgabeeinheit vorgesehen ist, mit mindestens ein der Gepäcktransportroute entsprechender Gepäcktag erstellbar ist, und
d) eine Sendevorrichtung vorgesehen ist, mit der ein die Gepäcktransportroute und die erstellten Gepäcktags charakterisierender Datensatz an eine für die Abwicklung der Gepäcktransportbestellung vorbestimmbare Adresse übermittelbar ist.

Zur weiteren vereinfachung der Festlegung der Gepäcktransportdetails können über das Benutzerinterface in den Abholdetails eine Abholadresse und eine Abholzeit bestimmbar sein. Auf diese Weise kann direkt mit der Erstellung des Billetts bestimmt werden, wann und wo das Gepäck von einem Gepäcktransportunternehmen abgeholt und transportiert werden kann ohne dass ein weiterer Kontakt zwischen dem Reisenden und dem Gepäcktransportunternehmen erforderlich wäre.

Beinahe schon selbstverständlich kann die Anzahl der Gepäckstücke bei der Erstellung des Gepäcktransportauftrags bestimmt werden, weshalb dann eine der bestimmten Anzahl von zu transportierenden Gepäckstücken entsprechende Anzahl von Gepäcktags erstellt wird. Für die Verarbeitung der Gepäckstücke innerhalb der logistischen Kette ist es weiter von besonderem Vorteil, wenn die Gepäcktags als RFID-Tags ausgestaltet sind. Damit sind die Gepäckstücke nach der Anbringung der RFID-Tags in Abhängigkeit von der technischen Ausgestaltung der RFID-Tags im Umkreis einiger Meter erfassbar, ohne dass es eines direkten Sichtkontaktes, wie dieser beispielsweise bei Barcode-Tags erforderlich ist, bedürfen würde.

Bei einer modernen Ausgestaltung der logistischen verarbeitungskette des Gepäcktransportunternehmens ist es heute üblich, dass der Transportfortschritt der zu transportierenden Gepäckstücke innerhalb des Gepäcktransportunternehmens stations- oder auch abschnittweise erfasst und verwaltet wird. Bei entsprechender Ausgestaltung einer Kundenschnittstelle können die Gepäckstücke anhand der zumindest stationsweise erfassten RFID-Tags über einen Remote-Zugang hinsichtlich ihres Transportfortschritts abfragbar sein. Ein derartiges Abfrageportal kann beispielsweise über die internet-Homepage des Gepäcktransportunternehmens oder das für den Billettverkauf verantwortliche Unternehmen geschaffen werden. Die Abfragemöglichkeit eröffnet dem Reisenden beispielsweise mit seiner eigenen Abreise zuzuwarten, bis seine Gepäckstücke auch tatsächlich am Ablieferort angeliefert worden sind. Hinreichend flexible Reisende können so sicherstellen, dass ihr Gepäck am gewünschten Ort vorhanden, wenn sie selbst dort ankommen.

Ein besonders vorteilhaftes Verfahren zur Erstellung der RFID-Tags kann es vorsehen, dass die RFID-Tags in Form eines Druckverfahrens mit einem leitfähigen Druckmedium erstellbar sind. Derartige leitende Polymerlacke sind dabei vom Druckvorgang her nicht schwieriger oder anders zu handhaben als dies für normale Tinte oder Farbpartikel gilt. Aus diesem Grund kann daher die Billettausgabeeinheit und die Gepäcktagausgabeeinheit als eine einzige Druckereinheit ausgestaltet sein, wodurch auch hinsichtlich des Platzbedarfs in einem Reisebüro oder einem Bahn- oder Flughafenschalter keine weitere Anforderungen zu stellen sind, die über den aktuell erforderlichen Aufwand hinausgehen.

Weitere vorteilhafte Ausgestaltungen der Erfindung sind den übrigen Unteransprüche zu entnehmen.

Die Erfindung wird nachfolgend anhand der Zeichnung beispielsweise näher erläutert. Dabei zeigen:
- Figur 1: einen Ablaufplan für ein Verfahren zur kombinierten Billett- und Gepäcktransportbestellung; und
- Figur 2a: ein Billett mit anhängenden RFID-Gepäcktags.

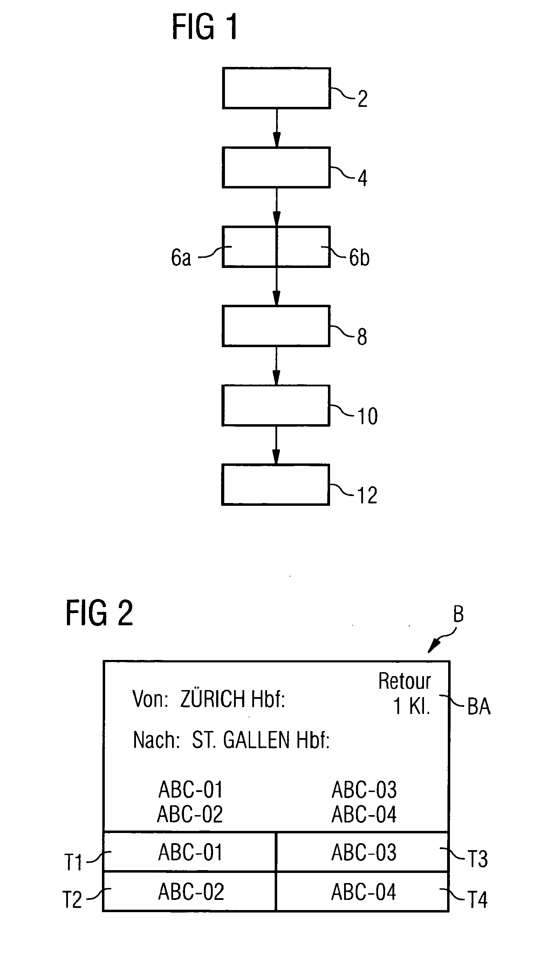

Figur 1 zeigt einen Ablaufplan für ein erstes erfindungsgemässes Verfahren zur kombinierten Billett- und Gepäcktransportbestellung. In einem ersten Schritt 2 wird beispielsweise an einem hier nicht weiter dargestellten Bedienerterminal eines Buchungs- und Reservierungssystems eines Eisenbahnunternehmens eine Reiseroute durch die Eingabe eines Abreiseortes und eines Zielortes bestimmt. Selbstverständlich können hier auch Transferbahnhöfe eingegeben werden, an denen die Reise kurzfristig unterbrochen wird. Ebenso ist es hier auch möglich, detailgenau die Abfahrts- und Ankunftszeiten in beiden Richtungen festzulegen, was ja häufig aus Reservierungsgründen so vorgenommen wird.

In einem nächsten Schritt 4 wird eine Gepäcktransportroute durch die Eingabe eines Abholortes und einer Abholzeit sowie eines Ablieferortes bestimmt. Zugleich wird die Anzahl der zu befördernden Gepäckstücke bestimmt.

In einem nächsten Schritt 6a wird für den oder die Reisenden ein Billett ausgedruckt, welches die Details der Reiseroute umfasst. Gleichzeitig oder anschliessend werden in einem Schritt 6b einer der Anzahl der zu befördernden Gepäckstücke entsprechende Anzahl von Gepäcktags erstellt, die dem Reisenden ebenso wie das Billett ausgehändigt werden. Die Gepäcktags sind dabei als RFID-Tags realisiert. Diese RFID-Tags könnne dabei entweder einem vorhandenen Pool von RFID-Tags entnommen und den Gepäckstücke zugewiesen werden oder tatsächlich durch einen Ausdruck mit einer leitfähigen Tinte, beispielsweise auf Polymerbasis, neu erzeugt werden. Wichtig ist es bei den beiden Vorgehensweisen, dass im Hintergrund in einem Schritt 8 ein Datenverarbeitungsprogramm läuft, welches aus der Gepäcktransportroute und ihren Details sowie der Anzahl und der Identität der den Gepäckstücken zugeordneten RFID-Tags einen für ein Transportunternehmen bestimmten Datensatz erzeugt.

Dieser Datensatz wird nach dem Abschluss der kombinierten Billett- und Gepäcktransportbestellung in einem Schritt 10 an eine zuvor bestimmte Adresse übermittelt. Diese Übermittlung erfolgt dabei über eine elektronische Nachricht mit dem eingelagerten Datensatz, der bei dem Adressaten direkt in die rechnergesteuerte Führung des logistischen Prozesses eingespeist werden kann.

Aufgrund der im Datensatz erhaltenen Angaben wird nun das Gepäck, d.h. die mit den RFID-Tags versehenen Gepäckstücke, in einem Schritt 12 bei dem Reisenden an dem vereinbarten Ort zur vereinbarten Zeit abgeholt und an den Ablieferort transportiert. Während des Transports hat der Reisende die Möglichkeit über die Homepage des Transportunternehmens und die Identitätsnummer seiner RFID-Tags den Transportfortschritt und die Ankunft seiner Gepäckstücke am vereinbarten Lieferort zu verfolgen. Analog gilt dies für den Gepäcktransport in der Gegenrichtung.

Auf diese Weise wird ist neuartiges Verfahren geschaffen, das es Reisenden erlaubt, mit einem für sie minimalen Aufwand das erforderliche Reisegepäck nahezu automatisch nach der entsprechenden Erstellung des Transportauftrags zusammen mit der Billetterstellung an den gewünschten Lieferort tranportieren zu lassen.

Die Figur 2 zeigt nun ein Billett B, an welchem direkt die bestellten RFID-Tags T1 bis T4 für die zu befördernden Gepäckstücke abtrennbar angehängt sind. Ein eigentlicher Billettabschnitt BA des Billetts B enthält die üblichen Angaben über die Reiseroute, aber zusätzlich nun auch noch die Identitätsnummern der unten anhängenden RFID-Tags T1 bis T4. Anhand dieser Nummer kann der Reisenden einerseits über eine Internetabfrage den Transportfortschritt seiner Gepäckstücke verfolgen, andererseits weist er sich damit als der rechtmässige Inhaber der so gekennzeichneten Gepäckstücke aus. Die RFID-Tags T1 bis T4 können vom Reisenden vom Billett B abgetrennt werden und beispielsweise mit einer auf der Rückseite angebrachten Klebefolie direkt auf dem Gepäckstück platziert werden. Damit sind die Gepäckstücke nun von entsprechend ausgestaltenen Lesern im Umkreis einiger Meter fernerfassbar.

Das Billett B und die RFID-Tags T1 bis T4 können in einem Drucker erzeugt werden, der beispielsweise über zwei Tintenpatronen verfügt, eine Herkömmliche für den Billettabschnitt BA und eine mit leitfähiger Tinte gefüllte Patrone für den Druck der RFID-Tags T1 bis T4. Alternativ können die RFID-Tags T1 bis T4 schon selbst auf das Billett B als Leiterfolie aufgeklebt werden.

## Patentansprüche

1. Verfahren zur kombinierten Billett- und Gepäcktransportbestellung, bei dem
a) eine durch einen Abreiseort und einen Zielort charakterisierte Reiseroute bestimmt wird;
b) eine durch Abholdetails und Ablieferdetails charakterisierte Gepäcktransportroute bestimmt wird;
c) ein der Reiseroute entsprechendes Billett (B) erstellt wird;
d) mindestens ein der Gepäcktransportroute entsprechender Gepäcktag (T1 bis T4) erstellt wird, und
e) ein die Gepäcktransportroute und die erstellten Gepäcktags (T1 bis T4) charakterisierender Datensatz an eine für die Abwicklung der Gepäcktransportbestellung vorbestimmbare Adresse übermittelt wird.

2. verfahren nach Anspruch 1,
**dadurch gekennzeichnet, dass**
in den Abholdetails eine Abholadresse und eine Abholzeit bestimmt wird.

3. verfahren nach Anspruch 1 oder 2,
**dadurch gekennzeichnet, dass**
ein einer bestimmbaren Anzahl von zu transportierenden Gepäckstücken entsprechende Anzahl von Gepäcktags (T1 bis T4) erstellt werden.

4. Verfahren nach einem der Ansprüche 1 bis 3,
**dadurch gekennzeichnet, dass**
die Gepäcktags (T1 bis T4) als RFID-Tags erstellt werden.

5. Verfahren nach Anspruch 4,
**dadurch gekennzeichnet, dass**
die Gepäckstücke anhand der zumindest stationsweise erfassten RFID-Tags über einen Remote-Zugang hinsichtlich ihres Transportfortschritts abgefragt werden.

6. Verfahren nach Anspruch 4 oder 5,
**dadurch gekennzeichnet, dass**
die RFID-Tags in Form eines Druckverfahrens mit einem leitfähigen Druckmedium erstellt werden.

7. Verfahren nach einem der Ansprüche 1 bis 6,
**dadurch gekennzeichnet, dass**
die Reiseroute und die Gepäcktransportroute anhand eines menügeführten Datenverarbeitungsprogramms bestimmt werden.

8. Vorrichtung zur kombinierten Billett- und Gepäcktransportbestellung, bei der
a) eine Datenverarbeitungsanlage mit einem Benutzerinterface vorgesehen ist, mit der eine durch einen Abreiseort und einen Zielort charakterisierte Reiseroute und eine durch Abholdetails und Ablieferdetails charakterisierte Gepäcktransportroute bestimmbar sind;
b) eine Billettausgabeeinheit vorgesehen ist, mit der ein der Reiseroute entsprechendes Billett (B) erstellbar ist;
c) eine Gepäcktagausgabeeinheit vorgesehen ist, mit mindestens ein der Gepäcktransportroute entsprechender Gepäcktag (T1 bis T4) erstellbar ist, und
d) eine Sendevorrichtung vorgesehen ist, mit der ein die Gepäcktransportroute und die erstellten Gepäcktags (T1 bis T4) charakterisierender Datensatz an eine für die Abwicklung der Gepäcktransportbestellung vorbestimmbare Adresse übermittelbar ist.

9. verfahren nach Anspruch 8,
**dadurch gekennzeichnet, dass**
über das Benutzerinterface in den Abholdetails eine Abholadresse und eine Abholzeit bestimmbar sind.

10. Verfahren nach Anspruch 8 oder 9,
**dadurch gekennzeichnet, dass**
ein einer bestimmbaren Anzahl von zu transportierenden Gepäckstücken entsprechende Anzahl von Gepäcktags (T1 bis T4) erstellbar sind.

11. verfahren nach einem der Ansprüche 8 bis 10,
**dadurch gekennzeichnet, dass**
die Gepäcktags (T1 bis T4) als RFID-Tags ausgestaltet sind.

12. Verfahren nach Anspruch 11,
**dadurch gekennzeichnet, dass**
die Gepäckstücke anhand der zumindest stationsweise erfassten RFID-Tags über einen Remote-Zugang hinsichtlich ihres Transportfortschritts abfragbar sind.

13. Verfahren nach Anspruch 11 oder 12,
**dadurch gekennzeichnet, dass**
die RFID-Tags in Form eines Druckverfahrens mit einem leitfähigen Druckmedium erstellbar sind.

14. Verfahren nach Anspruch 13,
**dadurch gekennzeichnet, dass**
die Billettausgabeeinheit und die Gepäcktagausgabeeinheit als eine einzige Druckereinheit ausgestaltet sind.
